# EUROPEAN PATENT APPLICATION

(11) **EP 3 324 337 A1**
(43) Date of publication of application: **23.05.2018**
(21) Application number: 17202331.9
(22) Date of filing: 17.11.2017
(51) Int. Cl.: G06K 9/00

(54) **INFORMATION PROCESSING DEVICE, INFORMATION PROCESSING METHOD, AND CARRIER MEANS**

(30) Priority: 18.11.2016 JP 2016224895; 06.09.2017 JP 2017171310
(71) Applicant: Ricoh Company Ltd., Ohta-ku Tokyo 143-8555 (JP)
(72) Inventor: TAKAHASHI, SADAO, Tokyo, 143-8555 (JP); TABITO, SUZUKI, Tokyo, 143-8555 (JP); DAISUKE, OKADA, Tokyo, 143-8555 (JP); SUKEHIRO, KIMURA, Tokyo, 143-8555 (JP); JUN, YOSHIDA, Tokyo, 143-8555 (JP); YOHICHIROH, OHBAYASHI, Tokyo, 143-8555 (JP); HIROKI, KUBOZONO, Tokyo, 143-8555 (JP); SEIYA, AMANO, Tokyo, 143-8555 (JP)
(74) Representative: Schwabe - Sandmair - Marx

(57) **Abstract**

An information processing device, an information processing method, and a carrier means. The information processing device and the information processing method include generating first data indicating distribution of a first object at prescribed resolution and second data indicating distribution of a second object at high resolution higher than the prescribed resolution, using data in which a position of an object in a horizontal direction and a position of the object in a depth direction are associated with each other, associating the first object with the second object when the first object corresponds to the second object, and selecting, when the second object includes a plurality of second objects, one of the first object and the second object that are associated with each other, based on whether the second object that is at a longer distance than the second objects exists near the second objects.

## Description

### BACKGROUND

### Technical Field

The present disclosure relates to an information processing device, an information processing method, and a carrier means.

### Background Art

Currently, the body structure or the like of cars have been developed with a view to improving the security of cars, for example, by protecting pedestrians or passengers when there is a collision with the passengers or other cars. Moreover, technologies to detect, for example, a person or a car at high speed have become known due to the development of information processing technologies and image processing technologies. With the application of such technologies, cars with a collision avoidance system (CAS) that prevent a collision by automatically applying brakes beforehand are also known. Such a collision avoidance system measures the distance to an object such as a person or another car, using, for example, a millimeter-wave radar device, a light detection and ranging (LiDAR) device, or a stereo camera, and controls the braking of the vehicle based on the result of measurement of distance. Due to this configuration, automatic braking can be achieved according to the distance to an object such as a person or another car.

JP-2014-096055-A discloses an object detector that detects objects upon precisely grouping the objects that are determined to be the same. Such an object detector groups valid ranges using a distance image, and then focuses on the contour (edge) of an image of grouped object with levels of gradation and divides the ranges accordingly.

WO 2012/017650 A1 discloses an object detection device that can precisely detect an object and a road surface. Such an object detection device detects a road-surface area, and then detects data having height equal to or greater than the road surface as a candidate for object area and determines the object and road surface based on the characteristics in shape.

However, in the known object detection technologies, an object may be detected by error. For example, there are some cases in which a plurality of pieces of vehicles are detected upon erroneously dividing one vehicle into such a plurality of pieces of vehicles, and there are some cases in which one vehicle is detected upon erroneously combining a plurality of pedestrians into such one vehicle.

### SUMMARY

Embodiments of the present disclosure described herein provide an information processing device, an information processing method, and a carrier means. The information processing device and the information processing method include generating first data indicating distribution of a first object at prescribed resolution and second data indicating distribution of at least one second object at high resolution higher than the prescribed resolution in the first data, using data in which a position of an object in a horizontal direction and a position of the object in a depth direction are associated with each other, associating the first object in the first data with the at least one second object in the second data when the first object in the first data corresponds to the at least one second object in the second data, and selecting, when the at least one second object includes a plurality of second objects, one of the first object in the first data and the at least one second object in the second data that are associated with each other, based on whether the at least one second object that is at a longer distance than the second objects exists near the second objects in the second data.
According to one aspect of the present invention, an object can precisely be detected.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.
FIG. 1 is a diagram illustrating the position of a stereo camera mounted on a vehicle, which is a part of an equipment control system, according to a first embodiment of the present disclosure.
FIG. 2 is a diagram illustrating a configuration of a stereo camera and its peripheral equipment provided for a vehicle, according to an embodiment of the present disclosure.
FIG. 3 is a diagram illustrating a configuration of an imaging device provided with a stereo camera, according to an embodiment of the present disclosure.
FIG. 4 is a diagram illustrating functional blocks implemented by a CPU of an equipment control system based on a vehicle control program, according to a first embodiment of the present disclosure.
FIG. 5A and FIG. 5B are diagrams illustrating a V-map according to an embodiment of the present disclosure.
FIG. 6 is a flowchart of the processes of setting a background region flag, which indicates the presence or absence of a background region, to an isolated area on a U-map, according to an embodiment of the present disclosure.
FIG. 7 is a diagram illustrating a U-map in which the horizontal axis indicates the actual distance and the vertical axis indicates a reduced disparity value, according to an embodiment of the present disclosure.
FIG. 8A is a diagram illustrating a low-resolution U-map according to an embodiment of the present disclosure.
FIG. 8B is a diagram illustrating a high-resolution U-map according to an embodiment of the present disclosure.
FIG. 9A is a diagram illustrating image frames that are set onto an isolated area of a U-map, in an equipment control system according to a first embodiment of the present disclosure.
FIG. 9B is a diagram illustrating an object disparity histogram calculated based on the image frames that are set onto an isolated area of a U-map, in an equipment control system according to a first embodiment of the present disclosure.
FIG. 9C is a diagram illustrating a background disparity histogram calculated based on the image frames that are set onto an isolated area of a U-map, in an equipment control system according to a first embodiment of the present disclosure.
FIG. 10 is a diagram illustrating the detection field of a background region on a U-map in which the horizontal axis indicates the actual distance and the vertical axis indicates a reduced disparity value, according to an embodiment of the present disclosure.
FIG. 11 is a flowchart of the processes of selecting an isolated area on a low-resolution U-map and a high-resolution U-map, according to an embodiment of the present disclosure.
FIG. 12 is a diagram illustrating functional blocks implemented by a CPU of an equipment control system based on a vehicle control program, according to a second embodiment of the present disclosure.
FIG. 13 is a flowchart of the processes of setting a background region flag, which indicates the presence or absence of a background region, to an isolated area on a U-map, and setting an image frame, in an equipment control system according to a second embodiment of the present disclosure.
FIG. 14 is a diagram illustrating the detection field of a background region on a U-map in which the horizontal axis indicates the X-axis and the vertical axis indicates a disparity value, according to a second embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific-integrated-circuits (ASICs), field programmable gate arrays (FPGAs), computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Some embodiments of an equipment control system will be described with reference to the drawings.

### <First Embodiment>

### <System Configuration>

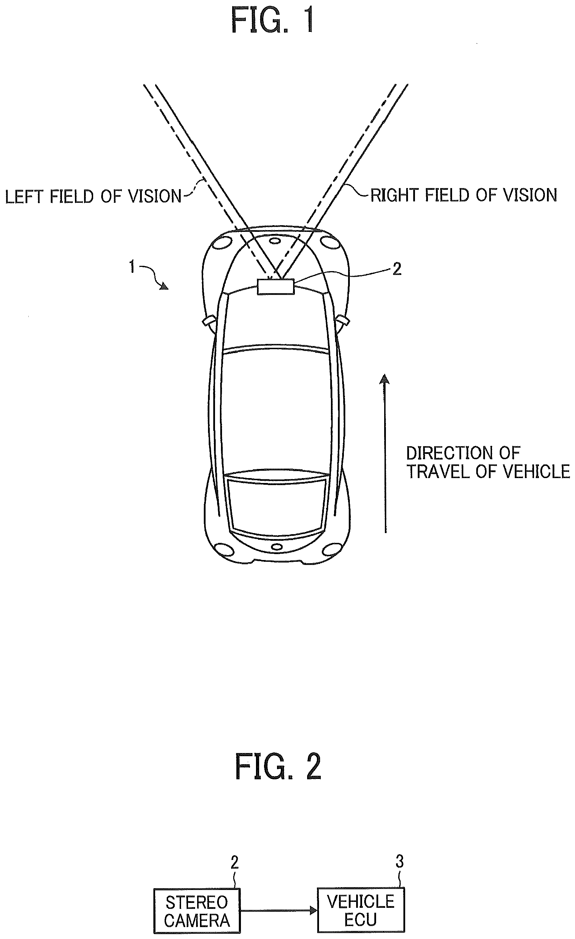

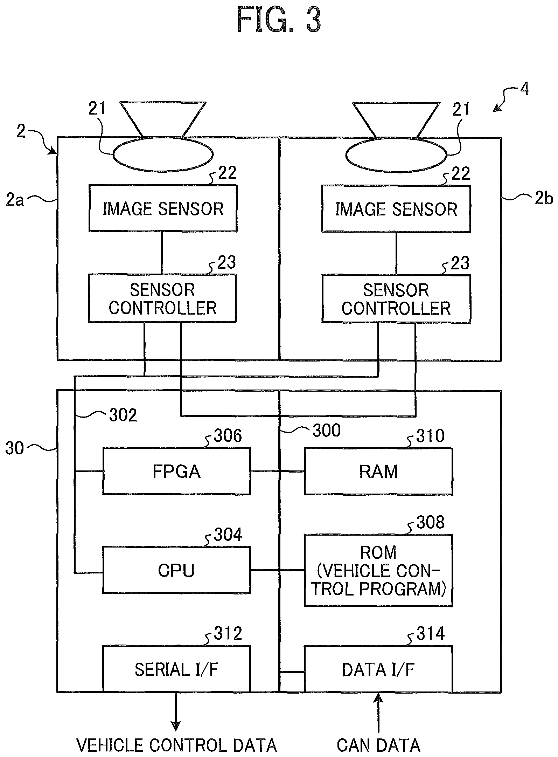

First, the equipment control system according to a first embodiment is mounted, for example, on the front windshield of a vehicle 1, as illustrated in FIG. 1, and is provided with a stereo camera 2 that captures an image of a predetermined area ahead of the vehicle 1 in the directions of travel. As will be described later with reference to FIG. 3, the stereo camera 2 is an imager provided with two image sensors 22, and captures two images of a right field of vision and a left field of vision.

FIG. 2 is a diagram illustrating a configuration of the stereo camera 2 and its peripheral provided for the vehicle 1 that is an example of a mobile object, according to the present embodiment. For example, the stereo camera 2 sends the captured two images to a vehicle engine control unit (ECU) 3. The vehicle ECU 3 is provided for the vehicle 1, and performs various kinds of control on the vehicle 1 such as engine-control, brake control, lane keep assist, and steering assist on the vehicle 1. The case of a vehicle is described as an example of a mobile object in the following description. However, the equipment control system according to the present embodiment may be applied, for example, to a ship, aircraft, and a robot.

### <Configuration of Imaging Device>

FIG. 3 is a diagram illustrating a configuration of an imaging device 4 provided with the stereo camera 2, according to the present embodiment. The imaging device 4 includes, for example, the stereo camera 2 and an image processing device 30. The stereo camera 2 includes a camera unit 2a for a left eye and a camera unit 2b for a right eye, and these two camera units are assembled horizontally in parallel and capture moving images (or still images) in an area to be captured.

Each of the camera unit 2a and the camera unit 2b includes a lens 21, an image sensor 22, and a sensor controller 23. The image sensor 22 is, for example, a charge coupled device (CCD) image sensor or a complementary metal oxide semiconductor (CMOS) image sensor. For example, the sensor controller 23 controls the exposure of the image sensor 22, controls the reading of an image, communicates with an external circuit, and controls the transmission of image data.

For example, the image processing device 30 may be installed inside the vehicle ECU 3 illustrated in FIG. 2. The image processing device 30 includes, for example, a data bus line 300, a serial bus line 302, a central processing unit (CPU) 304, a field programmable gate array (FPGA) 306, a read-only memory (ROM) 308, a random access memory (RAM) 310, a serial interface (I/F) 312, and a data interface (I/F) 314.

The stereo camera 2 as described above is connected to the image processing device 30 through the data bus line 300 and the serial bus line 302. The CPU 304 controls the entire operation of the image processing device 30, and performs image processing and image recognition processes. The brightness image data of the images that are captured by the image sensors 22 of the camera unit 2a and the camera unit 2b are written into the RAM 310 of the image processing device 30 through the data bus line 300. The control data for changing the exposure value of a sensor from the CPU 304 or the FPGA 306, the control data for changing the image reading parameter, various kinds of setting data, or the like are transmitted and received through the serial bus line 302.

The FPGA 306 performs processing that needs to be done in real time on the image data stored in the RAM 310, such as gamma correction, distortion correction (collimation of images on the right and left), disparity computation using block matching, to generate a disparity image, and writes the generated disparity image into the RAM 310 again. Note that the position of an object in the up-and-down directions, the position of the object in the right and left directions, and the position of the object in the depth direction are associated with each other on the disparity image.

The CPU 304 controls each one of the sensor controllers 23 of the stereo camera 2, and controls the entirety of the image processing device 30. The CPU 304 obtains the controller area network (CAN) data of the vehicle through the data interface 314 as parameters (e.g., vehicle speed, acceleration, a rudder angle, and a yaw rate).

The vehicle ECU 3 is supplied with vehicle control data, which is the recognition data of an object such as a preceding vehicle, a person, a guardrail, and a road surface, through the serial interface 312, and the vehicle control data is used, for example, by an automatic braking system and a drive assistance system provided as a control function of the vehicle ECU 3. The automatic braking system controls the braking of the vehicle 1. The drive assistance system performs various kinds of control on the vehicle 1 such as a lane keep assist and steering assist.

### <Function of Image Processing Device>

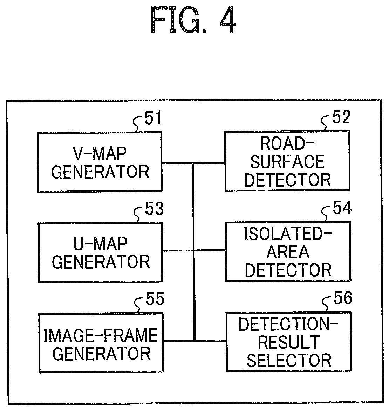

The CPU 304 of the image processing device 30 executes a vehicle control program stored in a storage unit such as the ROM 308 to implement the multiple functions depicted in FIG. 4, and detects an object such as a preceding vehicle, a person, a guardrail, and a road surface based on the disparity image captured by the imaging device 4. The vehicle ECU 3 using the output of object detection supplied as the vehicle control data as described above, performs various kinds of control on the vehicle 1 such as a brake control, lane keep assist, and a steering assist.

In other words, the CPU 304 executes a vehicle control program stored in a storage unit such as the ROM 308 to implement multiple functions such as a V-map generator 51, a road-surface detector 52, a U-map generator 53, an isolated-area detector 54, an image-frame generator 55, and a detection-result selector 56, as illustrated in FIG. 4.

In the present embodiment, the V-map generator 51, the road-surface detector 52, the U-map generator 53, the isolated-area detector 54, the image-frame generator 55, and the detection-result selector 56 are implemented by software. However, some of or all of the V-map generator 51, the road-surface detector 52, the U-map generator 53, the isolated-area detector 54, the image-frame generator 55, and the detection-result selector 56 may be implemented by hardware such as an integrated circuit (IC).

The vehicle control program may be installed for distribution in any desired computer-readable recording medium such as a compact disc, a read-only memory (CD-ROM), a flexible disk (FD), in a file format installable or executable by a computer. Moreover, the vehicle control program may be installed for distribution in any desired computer-readable recording medium such as a compact disc-recordable (CD-R), a digital versatile disk (DVD), a Blu-ray disc (registered trademark), and a semiconductor memory. Alternatively, the vehicle control program may be provided and installed through a network such as the Internet. Alternatively, the vehicle control program may be integrated in advance, for example, into the ROM inside the device for distribution.

The V-map generator 51 generates a V-map in which the position of an object in the vertical directions and the position of the object in the depth direction are associated with each other based on the disparity image generated from the image captured by the imaging device 4. For purposes of simplification of explanation, the term "map" is used in the present disclosure. However, a map or image-like data is not formed in actuality. It is to be understood that data group is generated in which the position of an object in the vertical directions and the position of the object in the depth direction are associated with each other.

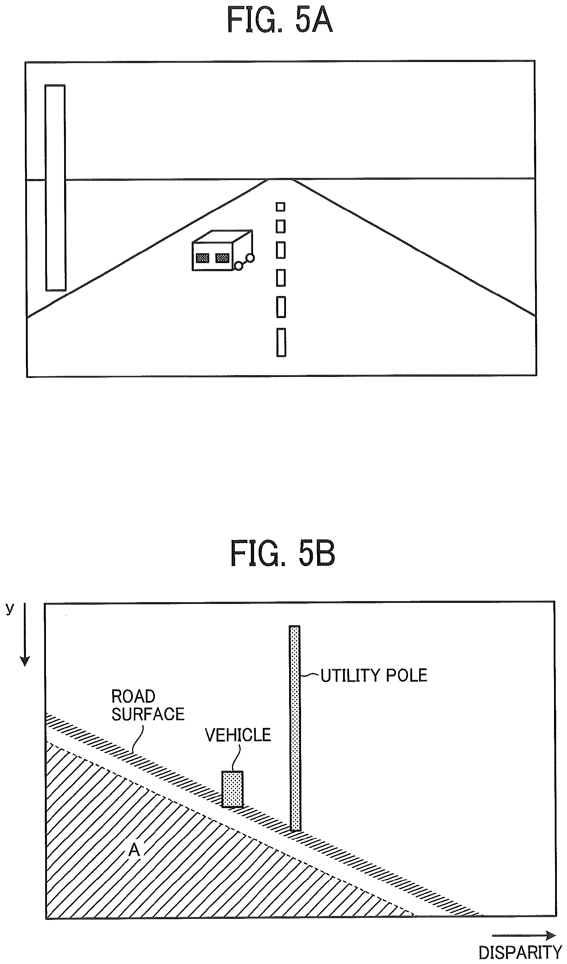

More specifically, as illustrated in FIG. 5A, for example, the imaging device 4 obtains a captured image where a vehicle is traveling forward on the left lane of a road formed in a straight line from the front towards the back of the image and a utility pole exists on the left of the image area. The above disparity image is formed based on this captured image. The V-map generator 51 generates, for example, a V-map, as illustrated in FIG. 5B, illustrating a two-dimensional histogram where the vertical axis indicates the y-coordinate of the image and the horizontal axis indicates the disparity d, based on the disparity image. In the case of the captured image illustrated in FIG. 5A, as illustrated in FIG. 5B, the vehicle and the utility pole are mapped in a way extending upward from the road surface in a straight line, according to the y-coordinate value and the disparity value.

The road-surface detector 52 performs, for example, Hough transformation or a least-squares method, to approximate in a straight line the position that is estimated to be the road surface in the V-map. When the road surface is relatively flat, the road surface can be approximated in a single straight line. However, when the grade of a road changes at some midpoint, the V-map is divided into several sections as desired to approximate the road in a straight line. By so doing, approximation in a straight line can be achieved with a high degree of precision. As illustrated in FIG. 5B, a lump that extends upward from the detected road surface corresponds to an object (e.g., a person or a vehicle) on the road surface.

For the purpose of removing noise, the U-map generator 53 uses the data of an area above the road surface in the V-map to generate a U-map in which the position of an object in the horizontal directions and the position of the object in the depth directions are associated with each other. For purposes of simplification of explanation, the term "map" is also used for the U-map in the present disclosure. However, a map or image-like data is not formed in actuality. It is to be understood that data group is generated in which the position of an object in the horizontal directions and the position of the object in the depth directions are associated with each other.

More specifically, the U-map generator 53 uses the data of an area above the road surface in the V-map to generate a U-map where the horizontal axis indicates the actual distance to an object and the vertical axis indicates a reduced disparity where the degree of reduction varies according to the distance to an object. For example, when the object is at a long distance equal to or greater than 50 meters (m), the U-map generator 53 does not reduce the disparity. However, when the object is at a middle distance equal to or greater than 20 m but less than 50 m, the U-map generator 53 reduces the disparity by half. Moreover, when the object is at a short distance equal to or greater than 10 m but less than 20 m, the U-map generator 53 reduces the disparity by one-third. Further, when the distance to the object is less than 10 m, the U-map generator 53 reduces the disparity by one-eighth. When the object is at a long distance, the object appears small, only a little disparity information is available, and the resolution of the distance is small. Accordingly, the disparity is not reduced. By contrast, when the object is at a short distance, the object appears large. Accordingly, a lot of disparity information is available, and the resolution of the distance increases. Thus, the disparity is reduced in a greater amount. In the present embodiment, a map of bird's-eye view (image of bird's-eye view) is generated in order to make it easier to detect an object. For this reason, it is satisfactory as long as the horizontal axis indicates an equivalent of the actual distance.

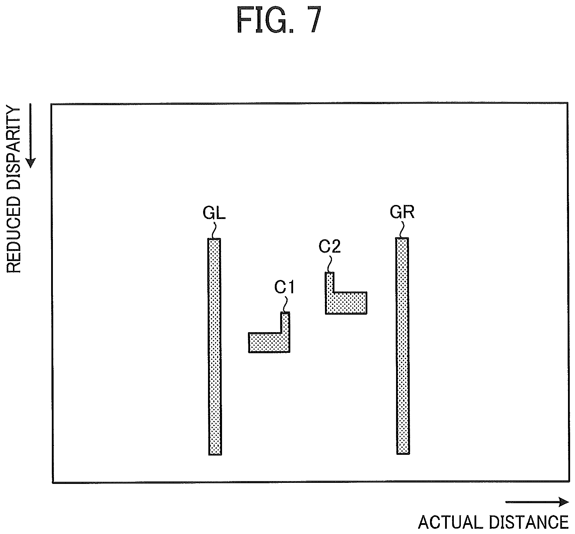

FIG. 7 is a U-map generated using a reduced disparity that is determined as above based on the distance to an object, according to the present embodiment. In the example illustrated in FIG. 7, there are two traffic lanes on the road placed between two guardrails GR and GL on the right and left sides, and vehicles C1 and C2 are traveling on the respective traffic lanes approximately in parallel with each other. In the example illustrated in FIG. 7, the U-map generator 53 generates a U-map where the vertical axis indicates the disparity value and the horizontal axis indicates the actual distance. However, a U-map where the vertical axis indicates the disparity value and the horizontal axis indicates the x-coordinate value may be generated, and the processes as will be described later in detail may be executed using such a U-map. Even in this case, a similar effect can be achieved compared with cases in which a U-map where the vertical axis indicates the disparity value and the horizontal axis indicates the actual distance is used. In other words, regardless of the conversion between the vertical axis and the horizontal axis, it is satisfactory as long as data group is available in which the position of an object in the horizontal directions and the position of the object in the depth directions are associated with each other.

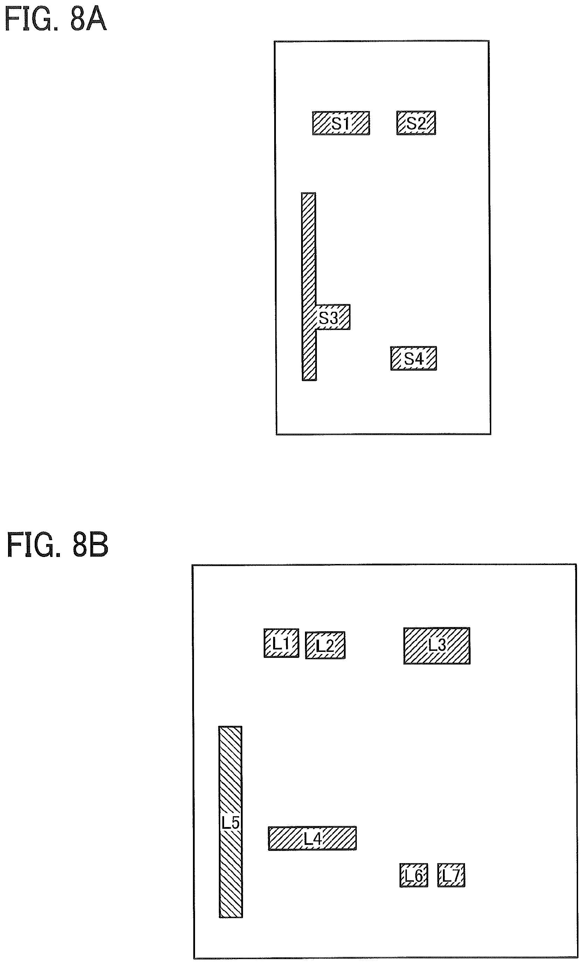

When a U-map in which the vertical axis indicates a reduced disparity value and the horizontal axis indicates the actual distance is to be generated, the U-map generator 53 generates, for example, two kinds of (or three or more kinds of) U-maps with varying degrees of resolution in the horizontal axis. FIG. 8A is a diagram illustrating a low-resolution U-map where the resolution in the horizontal axis is low, according to the present embodiment. FIG. 8B is a diagram illustrating a high-resolution U-map where the resolution in the horizontal axis is high, according to the present embodiment. The low-resolution U-map is an example of first data, and the high-resolution U-map is an example of second data.

Next, the isolated-area detector 54 illustrated in FIG. 4 detects isolated areas that correspond to the isolated objects (lumps) existing on a low-resolution U-map and a high-resolution U-map, and adds identification information (ID) to each of the isolated areas. Each of the areas that are indicated by rectangles in FIG. 8A and FIG. 8B is an example of isolated area. The width of a rectangle that surrounds an isolated area indicates the width of the isolated area, and the height of the rectangle indicates the depth of the isolated area. Note also that any known labeling processes (processes of giving ID to neighboring pixels) may be used to detect an isolated area, and an area to which the same ID is given, in sizes equal to or larger than the certain size, is extracted. However, no limitation is intended thereby, and any known various kinds of methods are applicable.

On a low-resolution U-map, multiple objects tend to be detected in a combined manner. In order to avoid such situation, the isolated-area detector 54 an object (isolated area) is detected on a base of the size of vehicle on a low-resolution U-map. By so doing, the accuracy (precision) of the detection of an object on a low-resolution U-map improves. By contrast, a high-resolution U-map has a high definition. Accordingly, the isolated-area detector 54 detects an object (isolated area) on a base of the size of pedestrian and the size of vehicle.

The isolated-area detector 54 gives ID to each of the detected isolated areas. FIG. 8A illustrates an example in which the isolated-area detector 54 gives ID of S1 and S2 to the respective two isolated areas detected on a far side. Moreover, FIG. 8A illustrates an example in which the isolated-area detector 54 gives ID of S3 to a long isolated area extending from a front side to a far side on the left side of FIG. 8A. Further, FIG. 8A illustrates an example in which the isolated-area detector 54 gives ID of S4 to the isolated area detected on a right front side.

FIG. 8B illustrates an example in which the isolated-area detector 54 gives ID of L1 to L3 to the respective three isolated areas detected on a far side. Moreover, FIG. 8B illustrates an example in which the isolated-area detector 54 gives ID of L5 to a long isolated area extending from a front side to a far side on the left side of FIG. 8B. Further, FIG. 8B illustrates an example in which the isolated-area detector 54 gives ID of L4 to the isolated area detected on a left front side. Further, FIG. 8B illustrates an example in which the isolated-area detector 54 gives ID of L6 and L7 to the respective two isolated areas detected on a right front side.

Next, the isolated-area detector 54 that serves as an associating unit associates with each other the several items of ID of the isolated areas that exist at the same position in reality, based on the results of the detection of isolated area on multiple U-maps, to integrate the detection results. Table 1 given below indicates an example of an integrated detection list where the results of integration are listed. Note that the isolated-area detector 54 stores such an integrated detection list in a storage unit such as the ROM 308 or the RAM 310 illustrated in FIG. 3.

**[Table 1]**

| Integrated Detection List No. | Low-resolution Detection ID | High-resolution Detection ID |
|---|---|---|
| | | |
| 1 | S1 | L1, L2 |
| 2 | S2 | L3 |
| 3 | S4 | L6, L7 |
| 4 | - | L4 |

When such an integration is performed by the isolated-area detector 54, the isolated area to which the ID of S3 is given, which is detected on a low-resolution U-map, and the isolated area to which the ID of L5 is given, which is detected on a high-resolution U-map, are isolated areas that significantly extend in the depth direction, and it is unlikely that these isolated areas correspond to a vehicle or a pedestrian. For this reason, as depicted in Table 1, the isolated-area detector 54 rejects the isolated areas to which the multiple items of ID of S3 and L5 are given, and performs integration with the remaining isolated areas.

In other words, as the isolated area of the ID of S1 includes the isolated areas of the ID of L1 and L2, the isolated-area detector 54 integrates the detection results obtained from the low-resolution U-map with the detection results obtained from the high-resolution U-map. Moreover, as the isolated area of the ID of S2 corresponds to the isolated area of the ID of L3 on a one-by-one basis, the isolated-area detector 54 integrates the detection results. Moreover, as the isolated area of the ID of S4 includes the isolated areas of the ID of L6 and L7, the isolated-area detector 54 integrates the detection results. Further, as there is no isolated area that corresponds to the isolated area of the ID of L4, the isolated-area detector 54 reflects the isolated area of the ID of L4 in the results of integration on its own.

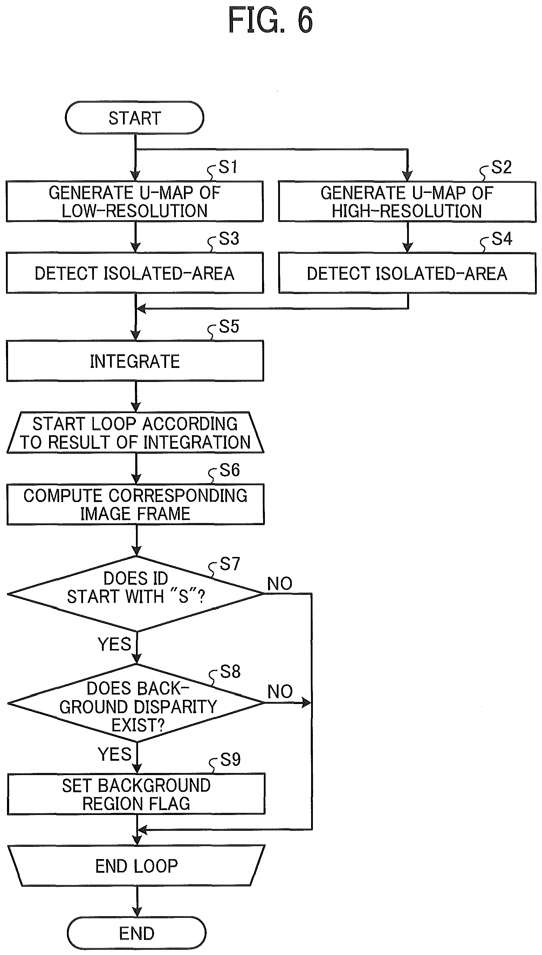

The flowchart illustrated in FIG. 6 indicates such a flow as follows.

Generation of U-map -> Detection of Isolated Area -> Integration of Detection Results -> Generation of Image Frame (described later) -> Selection of To-be-output Detection Results

The steps S1 to S5 in the flowchart of FIG. 6 indicates a flow as follows.

Generation of U-map -> Detection of Isolated Area -> Integration of Detection Results

More specifically, in the step S1 and the step S2, the U-map generator 53 generates U-maps of different resolution. In the step S3, the isolated-area detector 54 detects an isolated-area from a low-resolution U-map (see FIG. 8A). In the step S4, the isolated-area detector 54 detects an isolated-area from a high-resolution U-map (see FIG. 8B). Then, in the step S5 of FIG. 6, the isolated-area detector 54 integrates the detection results obtained from the high and low resolution U-maps, and generates an integrated detection list (see Table 1).

Subsequently, the image-frame generator 55 that serves as an image-frame setting device sets an image frame (target area), which is a frame indicating the corresponding area on a disparity image, onto each of the isolated areas on a low-resolution U-map, and generates an object disparity histogram and a background disparity histogram. More specifically, when an image frame is set onto each isolated area, the image-frame generator 55 sets positions where there are a predetermined number of successive histograms having frequencies equal to or greater than a predetermined threshold as the right and left edges of the image frame. Note that the term "frame" used herein indicates the position and size of an object, and indicates, for example, information in which the coordinates of the corners of a rectangle that surrounds an object are associated with the height and width of the rectangle.

Moreover, when there are a predetermined number of successive histograms having frequencies equal to or greater than a predetermined threshold in the height direction of an isolated area, the image-frame generator 55 sets that position as the top edge of the image frame. Further, the image-frame generator 55 searches for a disparity in the up-and-down directions with reference to the bottom of an assumed image frame, and sets a position where a predetermined number of disparities are detected in one line as the bottom edge of the image frame.

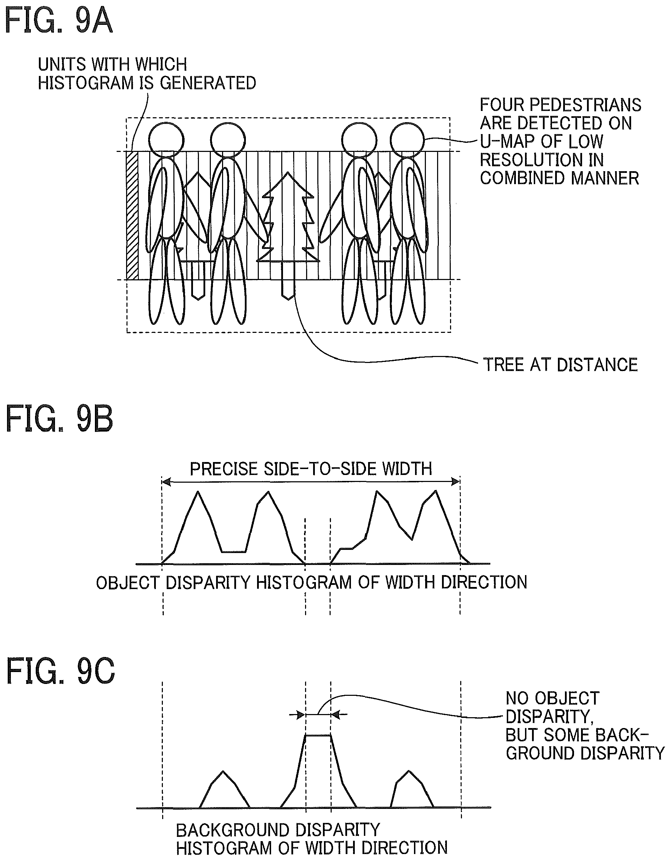

FIG. 9A is a diagram illustrating such an image frame set to an isolated area, according to the present embodiment. More specifically, FIG. 9A illustrates an example of an image frame that is set to the isolated area where four pedestrians are detected in a combined manner on a U-map of low resolution. In the case of FIG. 9A, a straight line that connects points around the jaws of the multiple pedestrians is set as the top edge of the image frame. Moreover, in the case of FIG. 9A, a straight line that connects points around the knees of the multiple pedestrians is set as the bottom edge of the image frame. In FIG. 9A, a straight line that touches the left hand of the pedestrian on the left that is positioned at right end is set as the right edge of the image frame. Further, in FIG. 9A, a straight line that touches the right hand of the pedestrian on the left that is positioned at left end is set as the left edge of the image frame.

Once such an image frame is set, the image-frame generator 55 regards, for example, a vertically oriented rectangular area indicated by oblique lines as in FIG. 9A as one detection field (1 bin), and extracts the frequency of disparities (adds up the frequency of disparities in 1 bin). Then, as illustrated in FIG. 9B, the image-frame generator 55 generates, for example, an object disparity histogram of the width direction (i.e., the lateral direction of the image) based on disparity value of the image in the image frame. In other words, the histogram is generated of a disparity area (for example, a prescribed range may be set with reference to disparities in an object detected on a high-resolution U-map, or disparities of high frequency in the image frame may be used) indicating objects in the image frame. In the case of FIG. 9A, as illustrated in FIG. 9B, an object disparity histogram of waveform in which the four parabolas each of which has its peak at the position of corresponding one of four pedestrians are joined together is obtained.

Further, the image-frame generator 55 generates, for example, a histogram of the disparities of the background that is at a position further than the disparities of object such as pedestrians or vehicles, based on disparity value of the image in the image frame. In other words, a histogram of a disparity area at a position further than a disparity area indicating objects in the image frame (for example, such a disparity area at a far position may be determined with reference to a disparity area in an object disparity histogram) is generated. In the case of FIG. 9A, as illustrated in FIG. 9C, a background disparity histogram is obtained of waveform where the three parabolas each of which has its peak at the positions of trees located further away in the depth direction than the pedestrians and viewable from the gap between the pedestrians are joined together.

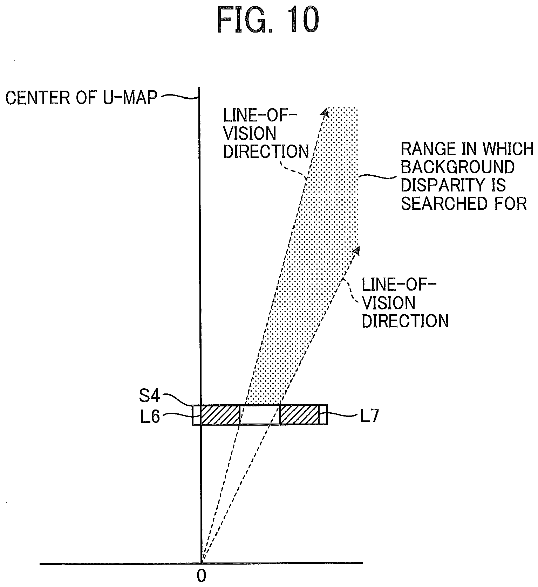

Next, the image-frame generator 55 detects an isolated area having a background disparity frequency on a background disparity histogram, in an area where no object disparity frequency exists on an object disparity histogram. As described above with reference to Table 1, for example, the isolated area of the ID of S4 on a low-resolution U-map is integrated with the isolated areas of the ID of L6 and L7 on a high-resolution U-map so as to be regarded as associated isolated areas. As illustrated in FIG. 10, the isolated area of the ID of S4 on a low-resolution U-map includes the isolated areas of the ID of L6 and L7 on a high-resolution U-map. Moreover, there is a gap between the isolated areas of the ID of L6 and L7 on a high-resolution U-map, and as understood from the arrows with dotted lines in FIG. 10 indicating line-of-vision directions, a view behind the isolated areas of the ID of L6 and L7 can be seen through.

As illustrated in FIG. 10, the image-frame generator 55 detects a background disparity in range viewable through the gap between the isolated areas of the ID of L6 and L7. When a background disparity exists in range viewable through the gap between the isolated areas of the ID of L6 and L7, the image-frame generator 55 associates background information indicating that a background disparity exists with the isolated area of the ID of S4 and the isolated areas of the ID of L6 and L7 (sets a background region flag). Further, when no background disparity exists in range viewable through the gap between the isolated areas of the ID of L6 and L7, the image-frame generator 55 associates background information indicating that no background disparity exists with the isolated area of the ID of S4 and the isolated areas of the ID of L6 and L7 (no background region flag is set).

More specifically, in the case of FIG. 9A, a single tree that serves as a background exists between the two pedestrians on the right side and the two pedestrians on the left side. In such a case, on the object disparity histogram illustrated in FIG. 9B, an area where no object disparity frequency exists appears at the position that corresponds to the single tree that serves as a background. By contrast, the background disparity histogram as illustrated in FIG. 9C has a background disparity frequency that forms a parabola having its peak at the position that corresponds to the single tree that serves as a background. The image-frame generator 55 gives background information (background region flag) indicating that a background region exists to the isolated areas that are put on the above integrated detection list and have a background disparity frequency on a background disparity histogram. Note also that such isolated areas correspond to an area where no object disparity frequency exists on an object disparity histogram. Table 2 given below indicates an integrated detection list to which the condition of a background region flag is added.

**[Table 2]**

| Integrated Detection List No. | Low-resolution Detection ID | High-resolution Detection ID | Background Region Flag |
|---|---|---|---|
| | | | |
| 1 | S1 | L1, L2 | Not Set |
| 2 | S2 | L3 | Not Set |
| 3 | S4 | L6, L7 | Set |
| 4 | - | L4 | Not Set |

Table 2 indicates that no background disparity exists in the isolated area of the ID of S1 on a low-resolution U-map and the isolated areas of the ID of L1 and L2 on a high-resolution U-map, which are integrated in the example as illustrated in FIG. 8A and FIG. 8B. This indicates, for example, a state in which the disparity score is low as the vehicle is at a great distance and one vehicle is detected upon being divided into two. In such a case, the image-frame generator 55 sets a background region flag indicating that no background exists (no background region flag is set).

In a similar manner, no background disparity exists in the isolated area of the ID of S2 on a low-resolution U-map and the isolated area of the ID of L3 on a high-resolution U-map. Accordingly, the image-frame generator 55 sets a background region flag indicating that no background exists (no background region flag is set). Note also that there is no such thing as an isolated area that is detected on only one of the U-maps. For example, the isolated area of the ID of L4 that is the isolated area detected only on a high-resolution U-map does not exist. Accordingly, the image-frame generator 55 sets a background region flag indicating that no background exists (no background region flag is set).

By contrast, in the isolated area of the ID of S4 on a low-resolution U-map that is integrated with the isolated areas of the ID of L6 and L7 on a high-resolution U-map, the isolated area of the ID of L3 exists as a background. Accordingly, the image-frame generator 55 sets a background region flag indicating that a background exists (sets a background region flag). The background region flag is a flag that is valid only for the ID given to an isolated area that is detected on a low-resolution U-map.

Steps S6 to S9 in the flowchart of FIG. 6 indicate such operation of the image-frame generator 55. The image-frame generator 55 repeatedly perform the steps S6 to S9 in order to give a background region flag to relevant one of the isolated areas. In other words, in the step S6, the image-frame generator 55 computes and sets an image frame to each one of the isolated areas.

In the step S7, the image-frame generator 55 determines whether or not the isolated area to be dealt with is an isolated area on a low-resolution U-map (whether or not the ID given to the isolated area starts with "S"). When it is determined to be "YES" in the step S7, in the step S8, the image-frame generator 55 determines whether or not a background disparity exists in the isolated area, based on the amount of characteristics indicated in the above object disparity histogram and background disparity histogram. When it is determined that a background disparity exists ("YES" in the step S8), in a step S9, a background region flag is set to that isolated area (see Table 2). Due to such a configuration where an image frame is set and whether or not there is any background disparity is determined, the speed of the entire operation can be enhanced.

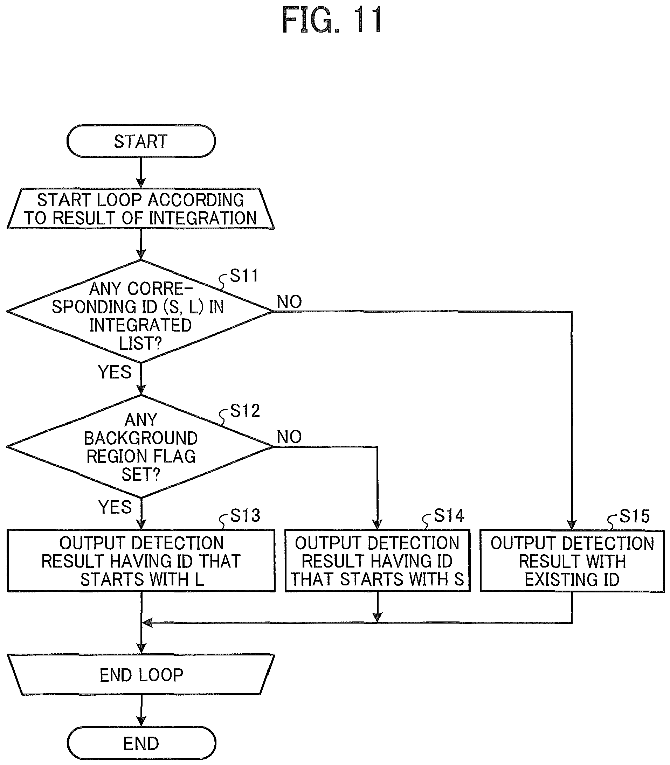

Next, the detection-result selector 56 illustrated in FIG. 4 that serves as a selector selectively outputs the detection results obtained from the low-resolution U-map or the detection results obtained from the high-resolution U-map, based on whether or not a background region flag is set. FIG. 11 is a flowchart of such selection processes, according to the present embodiment. The detection-result selector 56 repeats the processes in steps S11 to S 15 depicted in the flowchart of FIG. 11 the number of times equal to the number of lists in the integrated detection list in Table 2.

In other words, in the step S11, the detection-result selector 56 determines whether or not there are such isolated areas in the integrated detection list of Table 2 as the isolated area of the ID of S1 on a low-resolution U-map and the isolated areas of the ID of L1 and L2 on a high-resolution U-map that correspond to each other. When it is determined that there are no such isolated areas that correspond to each other ("NO" in the step S11), in the step S15, the detection-result selector 56 outputs the isolated area of existing ID as the detection result. This indicates an isolated area that exists only on one of the two U-maps, like the above-described isolated area to which the ID of L4 is given. In such a case, the detection-result selector 56 selects an isolated area that exists only on one of the two U-maps and outputs just as it is.

When it is determined that there are isolated areas that correspond to each other ("YES" in the step S11), in a step S12, the detection-result selector 56 refers to the integrated detection list as above depicted in Table 2, and determines whether or not any background region flag has been set to that integrated isolated area. When it is determined that a background region flag is set ("YES" in the step S12), the detection-result selector 56 selects an isolated area on a high-resolution U-map, and outputs the selected isolated area as the detection result. THe detection-result selector 56 outputs the isolated area with ID of L as the detection result (step S13). By contrast, when it is determined that no background region flag is set ("NO" in the step S12), the detection-result selector 56 selects an isolated area on a low-resolution U-map, and outputs the selected isolated area as the detection result (outputs an isolated area of ID that starts with "S" as the detection result) (step S 14).

In other words, when the ID of an isolated area on a low-resolution U-map and the ID of an isolated area on a high-resolution U-map are associated with each other in the integrated detection list (when these isolated areas are integrated with each other) and a background region flag is set to these isolated areas, the detection-result selector 56 selects an isolated area on a high-resolution U-map and outputs the selected isolated area as the detection result. By contrast, when no background region flag is set to any isolated area, selects an isolated area on a low-resolution U-map and outputs the selected isolated area as the detection result. When the isolated area is an isolated area that exists only on one of the two U-maps, that isolated area is selected and the selected isolated area is output as the detection result. Table 3 given below indicates a list of such a selective output configuration in tabular form.

**[Table 3]**

| Integrated Detection List No. | Final Detection Result | Typical Case |
|---|---|---|
| | | |
| 1 | S1 | Vehicle at a long distance is detected in a divided manner |
| 2 | S2 | Single vehicle is detected |
| 3 | L6, L7 | A pair of pedestrians or a pair of a vehicle and a pedestrian is detected in a combined manner |
| 4 | L4 | A vehicle close to a guardrail |

In the example of "Integrated Detection List No. 1" depicted in Table 3, the isolated area of the ID of S1 on a low-resolution U-map is integrated with the isolated areas of the ID of L1 and L2 on a high-resolution U-map, and for example, a single vehicle at a long distance is detected upon being divided into a plurality of pieces of object. In such a case, as depicted in Table 2, no background region flag is set. Accordingly, the detection-result selector 56 selects the isolated area to which the ID of S1 is given on a low-resolution U-map and outputs that selected isolated area as the detection result.

In the example of "Integrated Detection List No. 2" depicted in Table 3, the isolated area of the ID of S2 on a low-resolution U-map is integrated with the isolated area of the ID of L3 on a high-resolution U-map, and for example, a single vehicle at a long distance is detected. In such a case, as depicted in Table 2, no background region flag is set. Accordingly, the detection-result selector 56 selects the isolated area to which the ID of S2 is given on a low-resolution U-map and outputs that selected isolated area as the detection result.

In the example of "Integrated Detection List No. 3" depicted in Table 3, the isolated area of the ID of S4 on a low-resolution U-map is integrated with the isolated areas of the ID of L6 and L7 on a high-resolution U-map, and for example, two pedestrians at a short distance are detected in a combined manner or a pedestrian and a vehicle are detected in a combined manner. In such a case, as depicted in Table 2, a background region flag is set. Accordingly, the detection-result selector 56 selects the isolated areas to which the ID of L6 and L7 is given on a high-resolution U-map and outputs the selected isolated areas as the detection result.

In the example of "Integrated Detection List No. 4" depicted in Table 3, the isolated area of the ID of L4 is detected only on a high-resolution U-map, and for example, a vehicle close to a guardrail is detected. In such a case, as illustrated in FIG. 8A, a guardrail and a vehicle are detected in a combined manner on a low-resolution U-map, and thus the isolated area as a whole is regarded as a long object in the depth direction and is excluded from the targets from which an object is to be detected. However, a high-resolution U-map is of such a high resolution that a guardrail and a vehicle are detected in a separate manner, and only the guardrails are excluded from the targets from which an object is to be detected. Due to this configuration, the vehicle of the ID of L4 is independently detected on a high-resolution U-map. In such a case, as depicted in Table 2, no background region flag is set. Accordingly, the detection-result selector 56 selects the isolated area to which the ID of L4 is given on a high-resolution U-map and outputs the selected isolated area as the detection result.

The CPU 304 illustrated in FIG. 3 detects an object such as a preceding vehicle or a person from the isolated area based on the selected isolated area, and supplies the vehicle ECU 3 with the vehicle control data that is the recognition data of an object, through the serial interface 312.

When there are a plurality of isolated areas on a high-resolution U-map that correspond to an isolated area at a short distance on a low-resolution U-map, the equipment control system according to the first embodiment determines whether or not there is any background disparity at a long distance (whether or not there is any disparity at a long distance) in range viewable through the gap between multiple isolated areas. When a background disparity can be detected at a long distance through a gap between multiple isolated areas at a short distance on a high-resolution U-map, it indicates, for example, that a plurality of isolated areas are detected in a combined manner on a low-resolution U-map even though such a plurality of isolated areas exist in actuality like a pair of a pedestrian and a vehicle or a pair of vehicles. For this reason, the isolated areas on a high-resolution U-map where the accurately divided isolated areas are detected are selected as the output of detection and are used for the object recognition processes.

By contrast, when a background disparity cannot be detected at a long distance through a gap between multiple isolated areas at a short distance on a high-resolution U-map, it indicates that the image is in such a blurred state that a disparity in the middle of objects including at least two isolated areas cannot be detected. For example, when the captured image of a plain trailer truck includes blooming whites thereon, disparities between the body on the right side of the trailer truck and the body on the left side of the trailer truck can be detected based on the vertical edges at the boundary of the objects on the right and left sides. However, it is difficult to detect a disparity at some midpoint between the body on the right side of the trailer truck and the body on the left side of the trailer truck. Moreover, no background disparity exists between the body on the right side of the trailer truck and the body on the left side of the trailer truck. Due to such circumstances, when a single isolated area is detected on a high-resolution U-map upon being divided into a plurality of isolated areas in error, the isolated area on a low-resolution U-map where an object is accurately detected as a single isolated areas is selected as the output of detection and is used for the object recognition processes.

For example, an automatic braking system or a drive assistance system that is provided as the control function of the vehicle ECU 3 performs various kinds of control on the vehicle 1 such as a brake control, lane keep assist, and a steering assist on the vehicle 1, using the vehicle control data that is the recognition data of an object. Due to this configuration, the vehicle ECU 3 can more precisely control, for example, the braking of the vehicle 1 based on the above accurate recognition data of an object (i.e., the vehicle control data).

According to the present embodiment as described above, the isolated areas that are detected on a high-resolution U-map where objects tend to be detected in a separate manner are associated with the isolated areas that are detected on a low-resolution U-map where objects tend to be detected in a combined manner, and the output of detection can appropriately be selected based on whether or not an object at a longer distance than those isolated areas is detected. Accordingly, an object can precisely be detected.

### <Second Embodiment>

Next, the equipment control system according to a second embodiment is described. In the first embodiment as described above, whether or not there is any background disparity is determined after an image frame is set onto each of the multiple isolated areas on a low-resolution U-map and a high-resolution U-map. Moreover, in the first embodiment as described above, as a low-resolution U-map and a high-resolution U-map, a U-map is used where the horizontal axis indicates the actual distance to an object and the vertical axis indicates a reduced disparity where the degree of reduction varies according to the distance to an object.

By contrast, the equipment control system according to the second embodiment U-maps where the horizontal axis is indicated by the x-coordinate system of an image and the vertical axis is indicated by the coordinate system that is based on the disparity d are used as a low-resolution U-map and a high-resolution U-map. Moreover, the equipment control system according to the second embodiment determines whether or not there is any background region to be detected after multiple isolated areas are integrated, and sets an image frame to the isolated area selected based on the result of the above determination. Note that the second embodiment as will be described later is different from the first embodiment as described above only in this respect. For this reason, only the differences between the second embodiment and the first embodiment will be described below, and overlapping descriptions are omitted where appropriate.

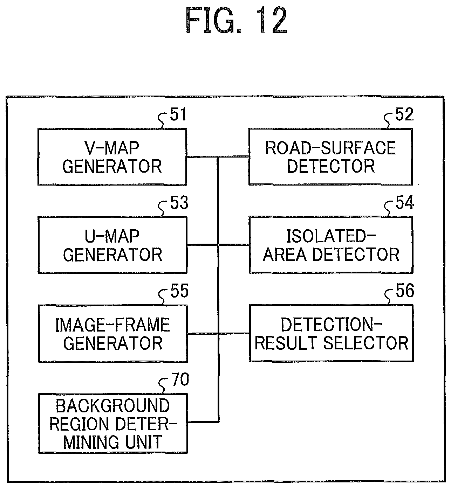

FIG. 12 is a diagram illustrating functional blocks of the multiple functions implemented as the CPU 304 of the image processing device 30 in the equipment control system according to the second embodiment executes a vehicle control program stored in a storage unit such as the ROM 308. As illustrated in FIG. 12, the CPU 304 executes a vehicle control program to implement the multiple functions of the background region determining unit 70 together with the above-described functions of the V-map generator 51, the road-surface detector 52, the U-map generator 53, the isolated-area detector 54, and the image-frame generator 55.

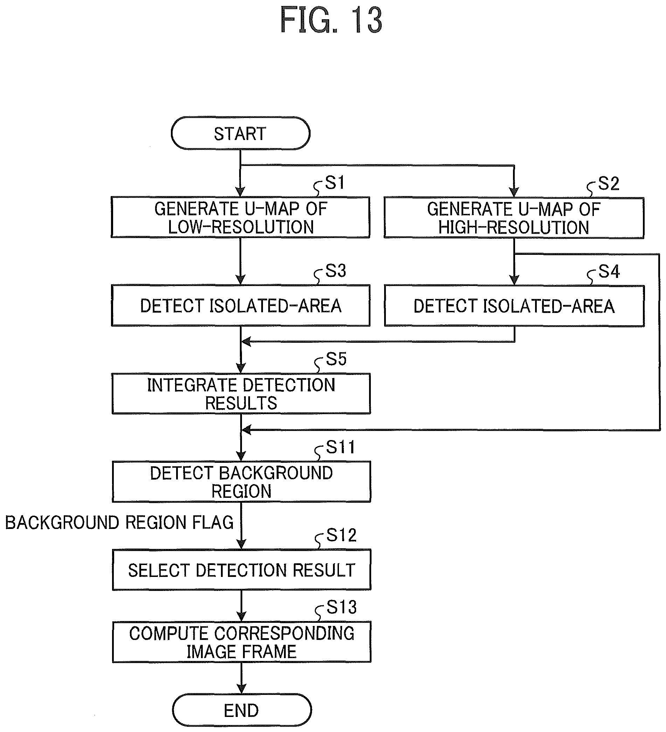

FIG. 13 is a flowchart of operations in the equipment control system according to the second embodiment, where the CPU 304 determines whether or not there is any background region upon integrating multiple isolated areas and sets an image frame onto the isolated area that is selected based on the presence or absence of a background region. In the steps S1 to S5 of the flowchart illustrated in FIG. 13, as described above with reference to FIG. 8A and FIG. 8B, the isolated-area detector 54 detects an isolated-area from a low-resolution U-map and a high-resolution U-map, and integrates the isolated areas that correspond to each other on the U-maps (see Table 1).

In the step S11, the background region determining unit 70 illustrated in FIG. 12 determines whether or not a disparity frequency (background region) is detectable at a long distance through a gap in each one of the isolated areas on a high-resolution U-map. Then, as described above with reference to Table 2, the background region determining unit 70 sets a background region flag indicating that a background region exists to the result of integration that corresponds to the isolated area where a disparity frequency (background region) is detectable at a long distance through a gap (sets a background region flag). the background region determining unit 70 sets a background region flag indicating that no background region exists to the result of integration that corresponds to the isolated area where a disparity frequency (background region) is not detectable at a long distance through a gap (clears the background region flag). See Table 2 for an integrated detection list to which the condition of a background region flag is to be added.

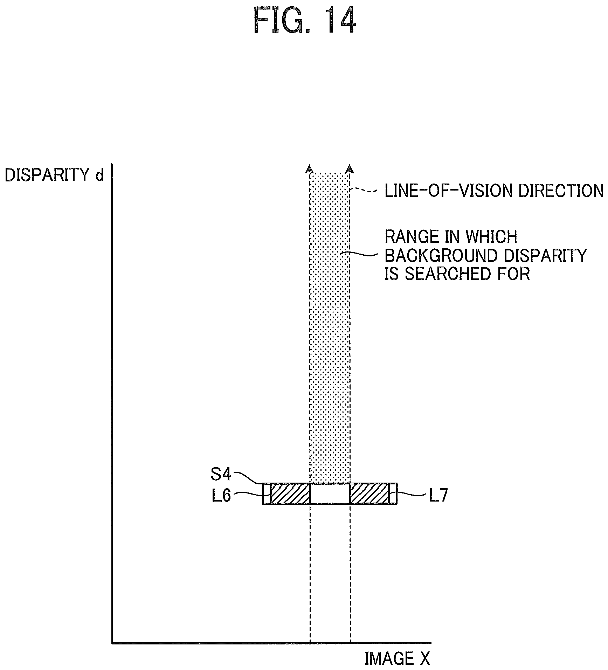

FIG. 14 is a schematic diagram illustrating the areas from which a background region is detected by the background region determining unit 70, according to the present embodiment. As described above, in the second embodiment, a U-map is used where the vertical axis indicates the disparity value and the horizontal axis indicates the X-axis. Accordingly, as illustrated in FIG. 14, the field in which a background region is to be detected is simplified to a linearly area in between the arrows with dotted lines indicating line-of-vision directions. Note also that the example illustrated in FIG. 14 indicates the field in which a background region is to be detected in cases where the isolated areas of the ID of L6 and L7 on a high-resolution U-map are included in the isolated area of the ID of S4 on a low-resolution U-map, as illustrated in FIG. 8A and FIG. 8B. In the example illustrated in FIG. 14, in a U-map where the vertical axis indicates the disparity value and the horizontal axis indicates the X-axis, on a high-resolution U-map, a detection field that linearly extends from an area between the two isolated areas of the ID of L6 and L7 is the field in which a background region is to be detected.

Next, in the step S12, the detection-result selector 56 selects an isolated area on a high-resolution U-map when a background region flag is set, and selects an isolated area on a low-resolution U-map when a background region flag is not set.

In a step S13, the image-frame generator 55 that serves as an image-frame setting device sets an image frame as described above with reference to FIG. 9A to the isolated area selected by the detection-result selector 56. The CPU 304 illustrated in FIG. 3 detects an object such as a preceding vehicle and a person from the isolated area based on the isolated area to which an image frame is set, and supplies the vehicle ECU 3 with the vehicle control data, which is the recognition data of an object, through the serial interface 312. For example, an automatic braking system or a drive assistance system that is provided as the control function of the vehicle ECU 3 using the vehicle control data that is the recognition data of an object, performs various kinds of control on the vehicle 1 such as a brake control, lane keep assist, and a steering assist on the vehicle 1. Due to this configuration, the vehicle ECU 3 can more precisely control, for example, the braking of the vehicle 1, based on the above accurate recognition data of an object (i.e., the vehicle control data).

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. For example, a distance value and a disparity value can be handled in an equivalent manner. Accordingly, in the embodiments of the present disclosure as described above, a disparity image is used as an example of a distance image. However, no limitation is intended thereby. For example, a disparity image that is generated using a stereo camera may be integrated with distance data that is generated using a detector such as a millimeter-wave radar and a light detection and ranging (LiDAR) device to generate a distance image. Moreover, a stereo camera and a detector such as a millimeter-wave radar and a LiDAR device may be used in combination, and the results of the object detection using a stereo camera as described above may be combined with distance data to further improve the detection accuracy.

Further, as described above, any one of the above-described and other methods of the present invention may be embodied in the form of a computer program stored on any kind of storage medium. Examples of storage media include, but are not limited to, flexible disks, hard disks, optical discs, magneto-optical discs, magnetic tape, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a CPU, a RAM, and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing device (30) comprising:
a generator (53, 304, 308) configured to generate first data indicating distribution of a first object at prescribed resolution and second data indicating distribution of at least one second object at high resolution higher than the prescribed resolution in the first data, using data in which a position of an object in a horizontal direction and a position of the object in a depth direction are associated with each other;
an associating unit (54, 304, 308) configured to associate the first object in the first data with the at least one second object in the second data when the first object in the first data corresponds to the at least one second object in the second data; and
a selector (56, 304, 308) configured to select, when the at least one second object includes a plurality of second objects, one of the first object in the first data and the at least one second object in the second data that are associated with each other, based on whether the at least one second object that is at a longer distance than the plurality of second objects exists near the plurality of second objects in the second data.

2. The information processing device (30) according to claim 1, wherein
when the first object that comprises only one first object in the first data is associated with the plurality of second objects in the second data,
in a case in which the at least one second object that is at a longer distance than the plurality of second objects exists near the plurality of second objects in the second data, the selector (56, 304, 308) selects second object data of the plurality of second objects in the second data, and
in a case in which the at least one second object that is at a longer distance than the plurality of second objects does not exist, the selector (56, 304, 308) selects first object data of the first object in the first data.

3. The information processing device (30) according to claim 1 or 2, wherein
when the at least one second object that is at a longer distance than the plurality of second objects exists in between the plurality of second objects in the second data, the selector (56, 304, 308) selects the second object data of the plurality of second objects in the second data.

4. The information processing device (30) according to any one of claims 1 to 3, wherein
the data in which the position of the object in the horizontal direction and the position of the object in the depth direction are associated with each other is disparity image data, and
the generator (53) generates the first data and the second data where a vertical axis indicates a disparity value and a horizontal axis indicates an actual distance, or generates the first data and the second data where a vertical axis indicates the disparity value and a horizontal axis indicates a value of X-axis.

5. The information processing device (30) according to any one of claims 1 to 4, further comprising
an image-frame setting device (55, 304, 308) configured to set an image frame for computing an amount of characteristics to the first object in the first data and the at least one second object in the second data,
wherein the selector (56, 304, 308) determines whether the at least one second object that is at a longer distance exists based on the image frame set by the image-frame setting device (55, 304, 308).

6. The information processing device (30) according to any one of claims 1 to 4, further comprising
an image-frame setting device (55, 304, 308) configured to set an image frame for computing an amount of characteristics to one of the first object in the first data and the at least one second object in the second data selected by the selector (56, 304, 308).

7. An imaging device (4) comprising:
an imager (2); and
the information processing device (30) according to any one of claims 1 to 6.

8. An equipment control system (3, 4) comprising:
the imaging device (4) according to claim 7; and
a controller (3) configured to control a prescribed apparatus (1) based on the first object data or the second object data selected by the selector (56, 304, 308) of the information processing device (30).

9. A mobile object (1) comprising
the equipment control system (3, 4) according to claim 8,
wherein the mobile object (1) is controlled by the controller (3) of the information processing device (30).

10. A method of processing information, the method comprising:
generating first data indicating distribution of a first object at prescribed resolution and second data indicating distribution of at least one second object at high resolution higher than the prescribed resolution in the first data, using data in which a position of an object in a horizontal direction and a position of the object in a depth direction are associated with each other;
associating the first object in the first data with the at least one second object in the second data when the first object in the first data corresponds to the at least one second object in the second data; and
selecting, when the at least one second object includes a plurality of second objects, one of the first object in the first data and the at least one second object in the second data that are associated with each other, based on whether the at least one second object that is at a longer distance than the plurality of second objects exists near the plurality of second objects in the second data.

11. A carrier means carrying computer readable code for controlling a computer system to carry out the method of claim 10.
